# EUROPEAN PATENT SPECIFICATION

(11) **EP 3 056 381 B1**
(45) Date of publication and mention of the grant of the patent: **12.07.2017**
(21) Application number: 15382053.5
(22) Date of filing: 12.02.2015
(51) Int. Cl.: B60P 1/28, B62D 33/023

(54) **Mechanical system for superstructures on vehicles**
Mechanisches System für Aufbauten auf Fahrzeugen
Système mécanique pour des superstructures sur des véhicules

(43) Date of publication of application: 17.08.2016
(73) Proprietor: Constante Laborda, Fernando Teodoro, 50180 Utebo- Zaragoza (ES)
(72) Inventor: Constante Laborda, Fernando Teodoro, 50180 Utebo- Zaragoza (ES)
(74) Representative: Baños Treceño, Valentín

(56) References cited:
- EP-A1- 1 435 309
- EP-A1- 1 820 691
- US-A1- 2006 237 992

## Description

### OBJECT OF THE INVENTION

The invention is designed to carry out the mounting a superstructure for vehicles at its destination, via the assembly of certain panels and sheets that, through joints (defined by the joining of certain ends in the different panels), and due to the effect of the screws or similar, together make up a fixed and stable panelled, reticular structure that does not require welding in order to be mounted.

The invention is made up of panels with certain profiles and sheets that, via the use of determined push fit closures and screws or similar, form the mechanical system for superstructures on vehicles made up of a lower surface or floor, edges, a front and a gate.

### BACKGROUND OF THE INVENTION

In order to satisfy certain transport requirements, it is necessary to have superstructures that are capable of holding goods and are provided with necessary tilting systems enabling said goods to be unloaded quickly.

A wide range of products are transported with this type of equipment, conveniently designed and manufactured according to the purpose they are intended for, such as in the case of aggregates and asphalt agglomerate on the one hand; cereals, fruits and vegetables on the other hand; and scrap metal and recycling; which are three of the main groups of goods that use this type of vehicle, and which each have different requirements and transport options. The stress to which this equipment is subjected is considerable taking into account that they transport high-density loads. Therefore, these superstructures must be designed and built appropriately for these circumstances.

Historically, this equipment was manufactured from steel, in the different types and quality thereof depending on the requirement, but for many years now aluminium has become the base material for manufacturing these superstructures due to the clear advantages it offers and increasing the penetration thereof insofar as its mechanical characteristics have been improved as new alloys have appeared on the market.

Based on different types of products, made of both steel and aluminium, hot-rolled sheets and profiles (steel), extruded profiles (aluminium), or similar, are transformed into portions or pieces that are finally assembled and joined to each other via welding processes, thus finally forming a superstructure, commonly referred to as a tipping body.

The conventional concept of a tipping body of a superstructure is essentially one made up of a lower surface or floor, on which the goods to be transported are deposited generally using gravity, two edges situated longitudinally at the ends of the floor, a front wall that closes the box at the front and a back gate that enables the goods to be emptied when unloading. In this way, a tipping body that is open on the upper part thereof is obtained.

To form these parts, currently a combination of hot-rolled sheets and extruded profiles welded together is used, in such a way that the transverse cross-section that is formed in the different cases corresponds to a U-shaped cross-section in different versions, depending on the manufacturer.

Among the multitude of records found, the Utility Model U200800130 titled "Perfected load tipper for vehicles", Utility Model U 201330262 titled "Perfected tipper", the patent ES2308659 named "Container for a vehicle", the patent EP0179962 titled "Joining profile" and the patent ES2439714 titled "Arrangement of a tipping body of a vehicle and corresponding manufacturing method" are highlighted.

Each and every one of said records have in common that they use welding as a fixing means between the different portions or elements that make up the superstructure, including in the records that refer to clipping or insertion means between pieces, which also requires welding in order to fix and secure some pieces to others because the coupling of the pieces is exclusively positional and not mechanical fixing like the joints that are the object of the present invention, as shall be demonstrated below.

Another detail to highlight that is common to all of them is that, due to this obligatory requirement to use welding lines, it is necessary to assemble all the pieces or portions that make up a tipping body via a process in a place suitable to do so, said mounting not being possible at the destination.

Thus, with the mechanical system for superstructures on vehicles, object of this invention, all these problems are solved, removing the welding in the mounting of tipping bodies via the combined use of technical profiles, which have a unique shape or configuration depending on the stresses; and rolled sheet, which provides mechanical resistance and resistance to wear; all joined or fixed through certain push-fit closures or joints, which support and distribute the stress to which they are subjected.

In such a way that with the mechanical system, object of the invention, the behaviour and useful life of a vehicle superstructure is improved, the manufacturing time is notably reduced due to not having the welding process, thus meaning that the consumption of electric energy is also reduced, similarly to pollutant emissions. It may be assembled at any destination given that it is easy to assemble, without the need for complex and expensive installations; and given that, as it is made out of transport modules, the mechanical system for superstructures on vehicles may reach any part of the world, using road and intermodal transport via ISO containers.

By way of example, the results corresponding to tests carried out on the present invention from which numeric values may be derived for the aforementioned improvements are stated:
This way of constructing with regards to tipping bodies, with a capacity between 24 m³ and 30 m³, enables approximately 250 lineal metres minimum of welding to be dispensed with compared to the conventional methods, which implies less energy consumption, approximately 3,000 kWh per unit, less assembly time, lower production cost and fewer pollutant emissions, which in the case of CO₂ the reduction is approximately 1,000 Kg per unit built.

### DESCRIPTION OF THE INVENTION

The invention includes panels with certain profiles, sheets and screws or similar; in such a way that via the combined use of these panels (which have a unique shape on the profile thereof depending on the stress to which it is subjected) with the aforementioned sheets, they are assembled manually at the destination without the need for welding, together forming a superstructure for vehicles or tipping bodies made up of a lower surface or floor, sides, a front and a gate.

Firstly, it must be noted that each and every one of the panels that make up the system of the invention are made from aluminium obtained through extrusion, in such a way that the aluminium combines a series of properties that give it highly valued features for its use, such as its extremely light weight, resistance, long durability, high malleability and resistance to corrosion, among others; and one-piece profiles with different shapes are obtained by means of extrusion.

As for the sheet of the mechanical system of the invention, it may equally be made of aluminium or steel, given that it does not depend on welding as a joining means between the different elements that make up the aforementioned system, but rather the load or potential thickness requirements of the same.

Moreover, it must be stated beforehand that all the holes or apertures assigned to screws or similar that are described in the different profiles throughout this specification, are apertures designed with a certain number of grooves around the perimeter thereof, with the aim that the shavings generated by screwing the fixing elements, such as screws of similar, to be introduced are deposited in the areas formed by the grooves.

Furthermore, before starting a detailed description of the invention it is important to note that, due to the fact that the superstructure or tipping body on vehicles is symmetrical, all the profiles and joining elements used for the construction or mounting thereof are symmetrical on both sides with respect to the central axis.

The lower surface or floor is made up of three different types of panels which are differentiated by their profiles, a certain sheet and fixing means, such as screws or similar.

The profile that corresponds to the central rolled panel of the floor of the mechanical system is a female-female type profile. This profile is differentiated as it has two housings or cavities referred to as female at both ends, through which they are inserted into or push-fitted with other male-type profiles.

These ends, referred to as female cavities, are distinctive in their profile because they have a hollow central inner portion, forming a circle open at its upper area and with a slightly deformed diameter. This distinctive feature is to prevent the male profile, which forms the joint or knot that will be explained below, from being removed due to being subjected to tensile stress. Moreover, on the outer surface of this central area there are recesses as slots with the function of providing the male profile with an inserting means or push fit closure. Therefore, the profile that corresponds to the central rolled panel of the floor of the mechanical system is a female-female type profile, it has female cavities at both ends as previously described, cut-outs distributed longitudinally on the profile, as well as defined holes or apertures assigned to screws or similar.

The rolled panel that is coupled and secured to the profile described, is a panel referred to as intermediate with a male-female type profile. This profile is roughly made up of an end that has a more or less round protuberance or projection referred to as male, and at the other end it has a housing or cavity referred to as female. In such a way that the male end of this panel is secured via a certain amount of pressure on the female-female rolled panel described above.

The end referred to as male, is distinctive in the profile thereof because it has a slightly deformed semi-circular protuberance in the central portion thereof and the shape coincides with the female portion to which it is coupled, in such a way that the contact between both ends once closed via pressure creates a joint in which the whole outer perimeter of the aforementioned protuberance is in direct contact with the inner portion of the cavity of the female end. Furthermore, in the upper and lower portion of the end there are projections that also fit into the slots of the female profile into which it is inserted, in this way helping the push fit closure system to be stable and ensuring that the joint is completely secured and fixed in the connection thereof.

As for the end referred to as female, it is distinctive because it has a hollow central inner portion, forming a circle open at its outer area and with a slightly deformed diameter, as well as the distinctive features already mentioned in the end of the previous profile.

Therefore, the rolled panel that corresponds to the male-female profile has a male protuberance at one end, such as the one described above, at the other end it has a female cavity, mentioned above, cut-outs distributed longitudinally on the profile, and also defined holes or apertures assigned to screws or similar.

Another aspect of the invention is the possibility of joining, via push fit closures, as many rolled panels with male-female profiles as necessary in order to form the lower surface or floor of the tipping body of vehicles of the invention.

The third type of profile that makes up the floor of the mechanical system for superstructures on vehicles of the invention is the one that corresponds to the side panel of the floor.

The profile of the side panel of the floor is unique due to having a male-type protuberance at one end (like the one described above, which is joined via pressure to the corresponding profile with a female cavity), and at the other end as it has two L-shaped projections or protrusions at different heights through which both the aforementioned side panel of the floor and a panel defined as the lower panel of the side of the tipping body, are fitted and secured, which will be explained below.

As well as the ends described, the profile of the side panel of the floor has cut-outs distributed longitudinally on the profile, as well as defined holes or apertures assigned to screws or similar.

As shown in the drawings below that are included in the description of the present invention, the panels that make up the lower surface of the tipping body are aligned parallel to the longitudinal central axis of said tipping body or superstructure, this fact being by no means limiting given that the aforementioned panels may also be aligned transversally with respect to the axis.

In order to complement the description of the lower surface or floor of the tipping body of the invention, it must be noted that on the entire surface that forms the connection between the different profiles, there is a certain sheet that may equally be of aluminium or steel and the typology only depends on the thickness and load requirements, given that the thickness of the sheet is directly related to the height of the two L-shaped projections or protrusions that the profile has at the end thereof of the side panel of the floor, which has been described above, in such a way that the thickness of the sheet may vary as long as it does not exceed the height of the aforementioned L-shaped protrusions.

Moreover, once the joints between the different panels have been defined, it must be said that the whole joint is worked when the joint is subjected to stress, the instant connection between the profile being insoluble, thus creating a secure steel structure, in such a way that in all the connections of the invention between a male end and a female end, the entire outer perimeter of the male protuberance is in direct contact with the majority of the inner perimeter of the female cavity; and similarly, the entire inner surface of the inserting or clipping projections of the male end are in direct contact with the majority of the surface of the inserting or clipping slots of the female cavities.

It is for this reason that it should be noted that the rest of the connections between panels in this document will be between profiles with male-type ends and profiles with female-type ends. Achieving, in all these cases, the distinctive features of fixing through a push fit closure, spreading the stress through the entire joint and securing the profiles without transversal movements, consequently, even if this fact is not repeated in each one of them it is indeed noted. Furthermore, it must be noted that, owing to the fact that the central portion of this tongue and groove joint is hollow, it is possible for a certain fastening element, such as a screw or similar, may be introduced therein, the remaining through-holes or apertures distributed along the length of each one of the profiles described above, acting in a similar way.

Each of the sides that make up the tipping body or superstructure is made up of four different types of panels, which are differentiated by their profiles, and screws or similar.

The profile referred to as lower is the profile through which the floor is secured to the side of the tipping body that forms the invention. This securing means is carried out via the introduction of the L-shaped projections of the floor, described above, into the lower profile through L-shaped cavities situated in a lower side of the aforementioned profile, the dimensions of which are slightly greater than the projections of the side profile (already mentioned). As well as these L-shaped cavities, in this lower side of the profile there is an extension of material that helps secure the floor of the superstructure, specifically the sheet.

This inner profile assembly has a certain bend angle in the whole face of the profile, which is situated in the inner portion of the tipping body, and another specific bend angle in part of the outer face of the aforementioned body, both faces therefore not being parallel.

Moreover, this profile referred to as lower is made up of a series of cut-outs distributed in the core; it has defined holes or apertures assigned to screws or similar; housings on the lower end that form guides along the length of the entire panel in order to position and house light cables, or similar; and on the opposite end to the one described, it has a female-type cavity that forms a joint along with the profile to which it is joined that is of the male-type.

The profile that is joined to the lower is referred to as the second lower profile. This profile also has a specific angle in the lower half of the cross-section thereof, both on the face that is situated on the inner portion and on the face that is situated on the outer portion of the tipping body, but in this case the two faces are parallel.

As previously described, at one of the ends thereof there is a male-type protuberance with its corresponding fastening means and at another of the ends thereof there is a female-type cavity with the distinctive features described above in previous profiles, as well as having a series of cut-outs distributed on the profile thereof, and defined holes or apertures assigned to screws or similar.
The rolled panel that is coupled and secured to the aforementioned profile is a panel referred to as intermediate side with a male-female type profile with the same distinctive features as the intermediate panel of the floor with a male-female profile. Therefore, similarly to the previous case, this type of panel with male-female profiles may be coupled between other male-female profiles as necessary, in this case only depending on the height configuration intended for the load and the resulting legal limits.

The last profile in each one of the sides of the mechanical system of the invention is a profile referred to as upper profile. This unique profile is made up of an end with a male protuberance that makes up a joint with the profile to which it is linked in the structure assembly, then it has defined holes or apertures assigned to screws or similar on the same axis (seen from the front), and perpendicularly to this axis there is a trapezium-shaped mass that has a hollow in the inner face of the tipping body, which makes it possible to position a tarpaulin support that slides longitudinally along the length of the tipping body as a guide, a housing situated on the outer face of the tipping body to hold a tarpaulin on the outer portion of the body, also as a guide, and two housings on the lower face of the trapezium to place or position the elements that are considered appropriate along the length of the longitudinal guides that are formed along the profile.

Another detail of the invention to highlight from this upper profile, is the existence of a different cross-section to the one described at the end of the panel in direct contact with the gate, due to having, in the area perpendicular to the axis (mentioned above) a plate as a hinge that enables the rotating element of the gate to be housed or introduced, this plate being secured on the end of the upper profile with screws or similar.

The gate that forms the tipping body or superstructure is made up of two identical sheets, two types of structural profiles, a frame of panels joined or secured by male-female connections, similarly to those described above, which enables the gate to be opened and closed via a rotation element situated in each one of the upper ends in this frame of panels; and fixing means such as screws or similar.

On the end of the tipping body that corresponds to the position of the gate, fixed around the entire perimeter of the floor and the sides are two identical U-shaped sheets prepared with apertures on the entire surface thereof, which via three structural profiles with identical features, i.e., structural profiles with eight guides, are also fixed to the floor and to the sides of the aforementioned tipping body. In this way, the result is that the "U" forming the connection of the floor and the sides of the superstructure are fixed and stable.

Furthermore, the make-up of the frame that forms the gate itself is by means of a male-female connection of the different panels with the different profiles thereof, i.e. the same as the make-up of the floor and the sides of the superstructure, the frame of the gate is formed by a central first panel with a female-female profile, to which other flat male-female type panels that form the aforementioned joints of the reticular system of the invention are fixed, with the exception that the lower profile of this frame has hooks on the base thereof to secure the gate when it is shut, as will be explained below.

In such a way that, via a specific number of these panels, a frame is formed that is hinged or put on the hinge, specifically at each upper end of the frame, the gate rotates.

In order to guarantee that the gate as a whole also remains shut, on the lower portion of the aforementioned structural profile with eight guides, another structural profile with a different configuration is fixed, where the hooks of the lower profile that makes up the frame of the gate, mentioned above, is fixed, the gate thus remaining securely closed.

Other details of the invention are the existence of lids that cover the free guides of the structural profiles (referred to as structural profiles with eight guides) situated on the sides of the gate; there is a bracket situated on the base of each one of the ends, which acts as a reinforcement of the lower panel of each one of the sides of the tipping body; and all the means by which the fixing of elements to others is carried out, as well as the joints between the aforementioned panels, are screws or similar.

The front that forms the tipping body or superstructure is made up of uniquely shaped sheets and screws or similar.

The first sheet to uniquely describe is the one that is in direct contact with the profiles that form the floor and the sides of the superstructure for vehicles. This sheet is isosceles trapezium-shaped in the central body thereof, its base is rectangular with a small step at both ends, and in its upper portion it is defined as an inverted L-shaped profile with a fold in the end thereof.

The whole of this first sheet has apertures or holes in the entire perimeter thereof, as well as other apertures distributed strategically on its surface for securing correctly, via screws or similar, to both the profiles that form the floor and the sides of the tipping body and to a second sheet that will be described below.

This uniquely shaped second sheet is defined as the sheet through which the stresses, to which the superstructure assembly is subjected as a result of the action of a hydraulic piston that will be described below, are distributed.

This sheet has a delta-shaped central body, a rectangular-shaped base thereof that is the same length as the aforementioned first sheet to which it is secured, and a rectangular-shaped neck with an inverted "L" configuration with a fold in its end is defined in the upper portion.

The third sheet is found secured to the sheet described above and is oblong-shaped, inclined at a specific angle that is integral to the inclination of the other sheets, it has apertures in the face in contact with the sheet referred to as secondary where they are fixed by means of screws or similar, and also has on an upper point of both sides of the oblong element apertures, the axes of which coincide, where a cylinder is introduced via which the vertical lifting and lowering of the tipping body is carried out with a hydraulic piston.

For this reason, the point on the superstructure that supports most stress due to hydraulic piston lifting is the secondary sheet, specifically on the inverted L-shaped upper portion.

Furthermore, for it to be possible to lift via the effects of an occasional force on a midpoint of one end of the tipping body, i.e. on a point of the front portion of the mechanical system, there are two elements with rollers that act as articulating axes on the base of the floor, through which the tipping body assembly enables the assembly to rotate, thus helping the load to be poured out.

Another detail of the invention that helps said lifting and lowering of the whole tipping body is the existence of pads, preferably made of extruded rubber, distributed longitudinally on the whole base or bottom portion of the floor, taking up the entire length of the latter, in such a way that they buffer the contact with the entire length of the chassis and are fixed via screws.

A more general idea of the features of the invention etc. in which the same references as the main patent have been respected in order to define the portions thereof that are common in this case, and providing complementary references in order to follow in the same identifying vein.

In the drawings:
Figure 1 shows the assembly of the mechanical system for superstructures of vehicles.
Figure 2 is an exploded view of figure 1.
Figure 2A is a detailed view of the upper profile of the gate in figure 2.
Figure 3 is a transversal cross-sectional view of the superstructure at a midpoint of figure 1.
Figure 4 shows an exploded view of the different profiles that make up half the floor and one side of figure 3.
Figure 4A is a detailed view of figure 4 that corresponds to the representation of a male-type end and a female-type end that are opposite each other.

### DESCRIPTION OF THE DRAWINGS

The invention includes panels with certain profiles, sheets and screws or similar; in such a way that via the combined use of these panels (which have a unique shape on the profile thereof depending on the stress to which it is subjected) with the aforementioned sheets, are assembled manually at the destination without the need for welding, together forming a superstructure for vehicles or tipping bodies made up of a lower surface or floor, edges, a front and a gate.

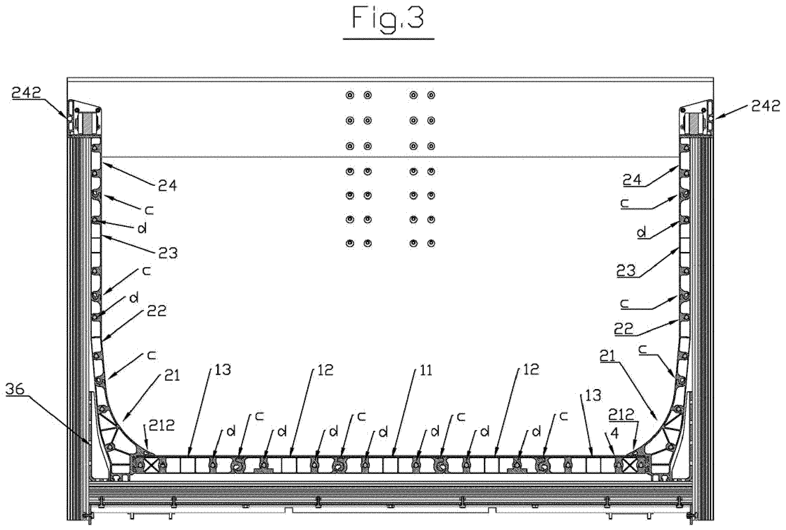

Moreover, it must be stated beforehand that all the holes or apertures (d) (Fig. 3) assigned to screws or similar that are described in the different profiles through this specification are apertures designed with a certain number of grooves around the perimeter thereof; except each one of the holes or cavities formed in the central portion of each joint (c) between the tongue and groove joints, which also makes it possible to house or introduce a fastening element such as a screw or similar.

Before starting a detailed description of the drawings of the invention it is important to note that, due to the fact that the superstructure or tipping body on vehicles is symmetrical, all the profiles and joining elements used for the construction or mounting thereof are symmetrical on both sides.

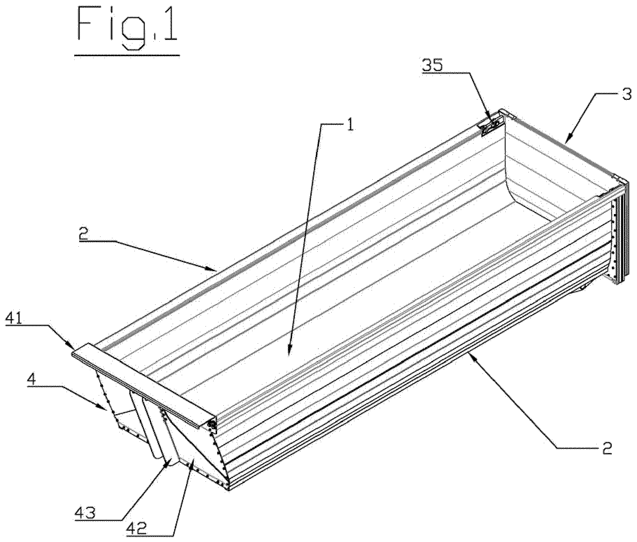

The lower surface or floor (1) (Fig. 1) is made up of three different types of panels (11, 12 and 13) that are differentiated by their profiles, a certain sheet (14) and screws or similar.

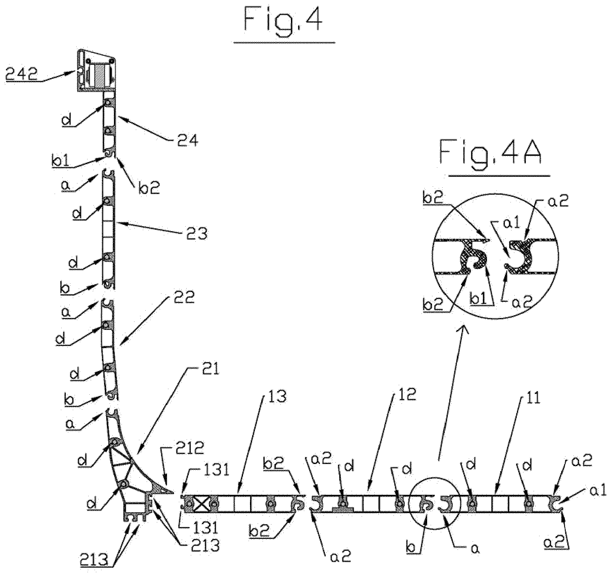

The profile that corresponds to the central rolled panel (11) of the floor (1) of the mechanical system is a female-female type profile (a-a) (Fig.4). This profile is characterised in that it has two housings or cavities referred to as female (a) at both ends, through which they are inserted into or push-fitted with other male-type profiles (b).

These ends, referred to as female cavities (a) (Fig.4A), are distinctive in their profile because they have a hollow central inner portion (a1) forming a circle open at its upper area and with a slightly deformed diameter. This distinctive feature is aimed to prevent the male profile, which forms the knot or joint (c) (which will be explained below) from being removed due to being subjected to tensile stress. Moreover, on the outer surface of this central area there are recesses as slots (a2) with the function of providing the male profile with an inserting means or push fit closure.

Therefore, the profile that corresponds to the central rolled panel (11) of the floor of the mechanical system is a female-female type profile (a-a), it has female cavities (a) at both ends as previously described, cut-outs distributed longitudinally on the profile, as well as defined holes or apertures (d) assigned to screws or similar.

The rolled panel (12) that is coupled and secured to the profile described, is a panel referred to as intermediate with a male-female type profile (b-a). This profile is roughly made up of an end that has a more or less round protuberance (b1) or prominence referred to as male (b), and at the other end it has a housing or cavity referred to as female (a), in such a way that the male end (b) of this panel is secured via a certain amount of pressure on the panel with a female-female profile (a-a) described above.

The end referred to as male (b), is distinctive in the profile thereof because it has a slightly deformed semi-circular protuberance (b1) in the central portion thereof and the shape coincides with the female portion (a1) to which it is coupled, in such a way that the contact between both ends once closed via pressure creates a joint (c) (Fig.3) in which the whole outer perimeter of the aforementioned protuberance (b1) is in direct contact with the inner portion of the cavity of the female end (a). Furthermore, in the upper and lower portion of the end there are projections (b2) that also fit into the slots (a2) of the female profile into which it is inserted, in this way helping the push fit closure system to be stable and ensuring that the joint is completely secured and fixed in the connection thereof.

As for the end referred to as female (a), it is distinctive because it has a hollow central inner portion (a1) forming a circle open at its outer area and with a slightly deformed diameter, as well as the distinctive features already mentioned in the female cavity (a) of the previous profile.

Therefore, the rolled panel (12) that corresponds to the male-female profile (b-a) has a male protuberance (b1) at one end, such as the one described above, at the other end it has a female cavity (a1) mentioned above, cut-outs distributed longitudinally on the profile, and also defined holes or apertures (d) assigned to screws or similar.

Another aspect of the invention is the possibility of joining, via push fit closures, as many rolled panels (12) with male-female profiles (b-a) as necessary in order to form the lower surface or floor (1) of the tipping body of vehicles of the invention.

The third type of profile that makes up the floor (1) of the mechanical system for superstructures on vehicles of the invention is the one that corresponds to the side panel (13) of the floor (1).

The profile of the side panel (13) of the floor (1) is unique due to having a male-type protuberance (b) at one end (like the one described above, which is joined via pressure to the corresponding profile with a female cavity (a)), and at the other end as it has two L-shaped projections or protrusions (131) (Fig.4) at different heights through which both the aforementioned side panel (13) of the floor (1) and a panel defined as the lower panel (21) of the side (2) of the tipping body, are fitted and secured, which will be explained below.

As well as the ends described, the profile of the side panel (13) of the floor (1) has cut-outs distributed longitudinally on the profile, as well as defined holes or apertures (d) assigned to screws or similar.

In order to complement the description of the lower surface or floor (1) of the tipping body of the invention, it must be noted that on the entire surface that forms the connection between the different profiles (11, 12 and 13), there is a certain sheet (14) that may equally be of aluminium or steel and the typology only depends on the thickness and load requirements, given that the thickness of the sheet (14) is directly related to the height of the two L-shaped projections or protrusions (131) that the profile has at the end thereof of the side panel (13) of the floor (1), which has been described above, in such a way that the thickness of the sheet (14) may vary as long as it does not exceed the height of the aforementioned L-shaped protrusions (131).
Moreover, once the joints (c) (Fig.3) between the different panels (11, 12 and 13) have been defined, it must be said that the whole joint (c) is worked when the joint (c) is subjected to stress, the instant connection between the profile being insoluble, thus creating a secure steel structure, in such a way that in all the connections of the invention between a male end (b) and a female end (a), the entire outer perimeter (b1) of the male protuberance (b) is in direct contact with the majority of the inner perimeter (a1) of the female cavity (a); and similarly, the entire inner surface of the inserting or clipping projections (b2) of the male end are in direct contact with the majority of the surface of the inserting or clipping slots (a2) of the female cavities (a).

It is for this reason that it should be noted that the rest of the connections between panels in this document will be between profiles with male-type ends (b) and profiles with female-type ends (a). Achieving in all these cases the distinctive features of fixing through a push fit closure, spreading the stress through the entire joint and securing the profiles without transversal movements, consequently, even if this fact is not repeated in each one of them it is indeed noted.

Each of the sides (2) (Fig.4) that make up the tipping body or superstructure is made up of four different types of panels (21, 22, 23 and 24), which are differentiated by their profiles, and screws or similar.

The profile referred to as lower (21) is the profile through which the floor (1) is secured to the side (2) of the tipping body that forms the invention. This securing means is carried out via the introduction of the L-shaped projections (131) of the floor (1), described above, into the lower profile (21) through L-shaped cavities (211) situated in a lower side of the aforementioned profile, the dimensions of which are slightly greater than the projections of the side profile (13) (already mentioned). As well as these L-shaped cavities (211), in this lower side of the profile (21) there is an extension of material (212) that helps secure the floor of the superstructure, specifically the sheet (4).
This inner profile (21) assembly has a certain bend angle in the whole face of the profile, which is situated in the inner portion of the tipping body, and another specific bend angle in part of the outer face of the aforementioned body, both faces therefore not being parallel.

Moreover, this profile referred to as lower (21), is made up of a series of cut-outs distributed in the core; it has defined holes or apertures (d) assigned to screws or similar; housings (213) on the lower end that form guides along the length of the entire panel (21) in order to position and house light cables, or similar; and on the opposite end to the one described, it has a female-type cavity (a) that forms a joint (c) along with the profile to which it is joined that is of the male-type (b).

The profile that is joined to the lower is referred to as secondary lower profile (22). This profile also has a specific angle in the lower half of the cross-section thereof, both on the face that is situated on the inner portion and on the face that is situated on the outer portion of the tipping body, but in this case the two faces are parallel.

As previously described, at one of the ends thereof there is a male-type protuberance (b) with its corresponding fastening means (b2) and at another of the ends thereof there is a female-type cavity (a) with the distinctive features described above in previous profiles, as well as having a series of cut-outs distributed on the profile thereof, and defined holes or apertures (d) assigned to screws or similar.

The rolled panel that is coupled and secured to the aforementioned profile is a panel referred to as intermediate side (23) with a male-female type profile (b-a) with the same distinctive features as the intermediate panel (12) of the floor (1) with the aforementioned male-female profile (b-a). Therefore, similarly to the previous case, this type of panel with male-female profiles (b-a) may be coupled between other male-female profiles (b-a) as necessary, in this case only depending on the height configuration intended for the load and the resulting legal limits.

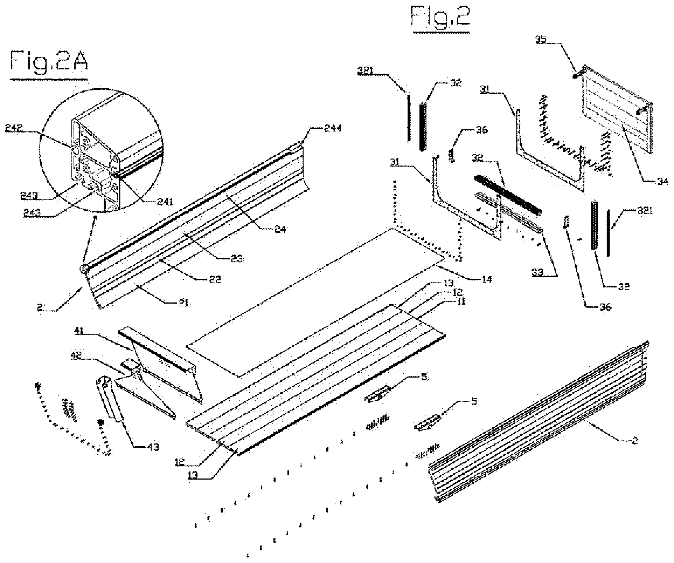

Lastly, in each one of the sides of the mechanical system of the invention there is a profile referred to as upper profile (24). This unique profile is made up of an end of a male protuberance (b) that makes up a joint (c) with the profile to which it is linked in the structure assembly, then it has defined holes or apertures (d) assigned to screws or similar on the same axis (seen from the front), and perpendicularly to this axis there is a trapezium-shaped mass that has a hollow (241) (Fig. 2A) situated on the inner face of the tipping body, which makes it possible to position a tarpaulin support that slides longitudinally along the length of the tipping body as a guide, a housing (242) situated on the outer face of the tipping body to hold a tarpaulin on the outer portion of the body, also as a guide, and two housings (243) on the lower face of the trapezium to place or position the elements that are considered appropriate along the length of the longitudinal guides that are formed along the profile.

Another detail of the invention to highlight from this upper profile (24), is the existence of a different cross-section to the one described at the end of the panel in direct contact with the gate (3) (Fig.2), due to having, in the area perpendicular to the axis (mentioned above) a plate (244) as a hinge that enables the rotating element of the gate (3) to be housed or introduced, this plate being secured on the end of the upper profile (24) with screws or similar.

The gate (3) (Fig.2) that forms the tipping body or superstructure is made up of two identical sheets (31), two types of structural profiles (32 and 33), a frame of panels (34) joined or secured by male-female connections (a-b), similarly to those described above, which enables the gate to be opened and closed via a rotation element (35) situated in each one of the upper ends in this frame of panels; and fixing means such as screws or similar.

On the end of the tipping body that corresponds to the position of the gate (3), fixed around the entire perimeter of the floor (1) and the sides (2) are two identical U-shaped sheets (31) prepared with apertures on the entire surface thereof, which via three structural profiles with identical features, i.e., structural profiles with eight guides (32), are also fixed to the floor (1) and to the sides (2) of the aforementioned tipping body. In this way, the result is that the "U" forming the connection of the floor and the sides of the superstructure are fixed and stable.

Furthermore, the make-up of the frame (34) that forms the gate (3) itself is by means of a male-female connection (b-a) of the different panels with the different profiles thereof, i.e. the same as the make-up of the floor (1) and the sides (2) of the superstructure, the frame of the gate (1) is formed by a central first panel with a female-female profile (a-a), to which other flat male-female type panels (b-a) that form the aforementioned joints (c) of the reticular system of the invention are fixed, with the exception that the lower profile of this frame (34) has hooks on the base thereof to secure the gate (3) when it is shut, as will be explained below.

In such a way that, via a certain number of these panels, a frame (34) is formed that is hinged or put on the hinge, specifically at each upper end of the frame, the gate rotates.

In order to guarantee that the gate as a whole also remains shut, on the lower portion of the aforementioned structural profile with eight guides (32), another structural profile with a different configuration is fixed, where the hooks of the lower profile that makes up the frame (34) of the gate, mentioned above, is fixed, the gate thus remaining securely closed.

Other details of the invention are the existence of lids (321) that cover the free guides of the structural profiles with eight guides (32) situated on the sides of the gate (3); there is a bracket (36) situated on the base of each one of the ends, which acts as a reinforcement of the lower panel of each one of the sides (2) of the tipping body; and all the means by which the fixing of some elements to others is carried out, as well as the joints (c) between the aforementioned panels, are screws or similar.

The front (4) (Fig.2) that forms the tipping body or superstructure is made up of uniquely shaped sheets (41, 42 and 43) and screws or similar.

The first sheet (41) to uniquely describe is the one that is in direct contact with the profiles that form the floor (1) and the sides (2) of the superstructure for vehicles. This sheet (41) is isosceles trapezium-shaped in the central body thereof, its base is rectangular with a small step at both ends, and in its upper portion it is defined as an inverted L-shaped profile with a fold in the end thereof.

The whole of this first sheet (41) has apertures or holes in the entire perimeter thereof, as well as other apertures distributed strategically on its surface for securing correctly, via screws or similar, to both the profiles that form the floor (1) and the sides (2) of the tipping body and to a second sheet (42) that will be described below.

This uniquely shaped second sheet (42) is defined as the sheet through which the stresses, to which the superstructure assembly is subjected as a result of the action of a hydraulic piston that will be described below, are distributed.

This sheet (42) has a delta-shaped central body, a rectangular shape base thereof that is the same length as the aforementioned first sheet (41) to which it is secured, and a rectangular-shaped neck with an inverted "L" configuration with a fold in its end is defined in the upper portion.

The third sheet (43) is found secured to the sheet (42) described above and is oblong shaped, inclined at a specific angle that is integral to the inclination of the other sheets, it has apertures in the face in contact with the sheet referred to as secondary (42) where they are fixed by means of screws or similar, and also has, on an upper point of both sides of the oblong element, apertures, the axes of which coincide, where a cylinder is introduced via which the vertical lifting and lowering of the tipping body is carried out with a hydraulic piston.

For this reason, the point on the superstructure that supports most stress due to hydraulic piston lifting is the secondary (42) sheet, specifically on the inverted L-shaped upper portion.

Furthermore, for it to be possible to lift via the effects of an occasional force on a midpoint of one end of the tipping body, i.e. on a point of the front portion (4) of the mechanical system, there are two elements with rollers (5) that act as articulating axes on the base of the floor (1), through which the tipping body assembly enables the assembly to rotate, thus helping the load to be poured out.

Another detail of the invention that helps said lifting and lowering of the whole tipping body is the existence of pads (6), preferably made of extruded rubber, distributed longitudinally on the whole base or bottom portion of the floor (1), taking up the entire length of the latter, in such a way that they buffer the contact with the entire length of the chassis and are fixed via screws or similar.

The nature of the invention having been sufficiently described, it must be stated for all purposes that the latter is not limited to the exact details of this description.

## Claims

1. A mechanical system for superstructures on vehicles made up of a lower surface or floor, sides, a front and a gate that is **CHARACTERISED in that**:
- the lower surface or floor (1) is made up of three different types of panels (11, 12 and 13) that are differentiated by their profiles, a certain sheet (14) and screws or similar, in such a way that:
▪ one panel is the so-called central rolled panel (11) with a female-female type profile (a-a), having two housings or cavities referred to as female (a) at both ends, cut-outs distributed longitudinally and defined holes or apertures (d) assigned to screws or similar;
▪ secured by pressure to the same, there is a rolled panel referred to as intermediate (12) with a male-female type profile (b-a), having an element referred to as male (b) at one end, at the other end there being a cavity referred to as female (a), it being provided with cut-outs distributed longitudinally on the profile thereof and defined holes or apertures (d) assigned to screws or similar;
▪ a side panel (13) having a protuberance or male-type element (b) at one end, there being at the other end another two L-shaped projections or protrusions (131) at different heights, is provided with cut-outs distributed longitudinally and defined holes or apertures (d) assigned to screws or similar;
▪ and a sheet (14), situated over the whole face of the surface formed by the different panels (11, 12 and 13) joined by certain joints (c), the thickness of which is directly related to the height of the two L-shaped protrusions (131), the thickness of the aforementioned sheet (14) never exceeding the height of these L-shaped protrusions (131);
- each one of the sides (2) being made up of the joining of four different types of panels (21, 22, 23 and 24) differentiated by their profiles, a plate (244) and screws or similar, in such a way that;
▪ one panel is the so-called lower panel (21) having L-shaped cavities (211) on a lower side and at different heights, the dimensions of which are slightly greater than the protrusions of the side profile (13), having an extension of material (212) in the same lower side; there furthermore being a certain bend angle in the whole face of the profile, which is situated in the inner portion of the tipping body, and another specific bend angle in the outer portion of the face of the aforementioned body, both faces not being parallel; the profile having housings (213) on the lower end forming guides along the length of the entire panel (21), in the upper end there being a female-type cavity (a); and also having a series of cut-outs distributed in the core, and defined holes or apertures (d) assigned to screws or similar;
▪ joined to this there is a profile referred to as secondary lower (22), which has a specific angle in the lower half of the cross-section thereof, both on the face situated on the inner portion and on the face situated on the outer portion of the tipping body, the two faces being parallel; there being at one of the ends thereof a male element (b) and at the other end a female-type cavity (a); it also having a series of cut-outs distributed on the profile, and defined holes or apertures (d) assigned to screws or similar;
▪ there is a panel referred to as intermediate side (23) with a male-female type profile (b-a) it having a female-type cavity (a) at one end and at the other end a male-type element (b), also having cut-outs distributed longitudinally on the core, and defined holes or apertures (d) assigned to screws or similar;
▪ and a panel referred to as upper (24) that has at one end a male-type element (b), forming a joint (c) with the profile to which it is linked in the structure assembly, thereafter having defined holes or apertures (d) assigned to screws or similar on the same axis (seen from the front), and perpendicular to this axis there being a trapezium-shaped mass that has a hollow (241) situated on the inner face of the tipping body, a housing (242) situated on the outer face of the same and there being two housings on the lower face of the trapezium;
- the gate (3) being made up of two identical U-shaped sheets (31) with apertures distributed on the entire surface thereof, three structural profiles (32) with eight guides, lids (321), a structural profile (33) and a frame (34) constituting a male-female connection (b-a) of the different panels with the different profiles thereof corresponding to the connection of one central panel with a female-female profile (a-a), the lowest profile or lower profile of this frame (34) therefore additionally having hooks on the base thereof; the fixing means being screws or similar and the joints (c) between panels;
- and lastly, the front (4) constituting the juxtaposition of:
▪ a first sheet (41), being in direct contact with the profiles that form the floor (1) and the sides (2) of the superstructure, formed by a central body with an isosceles trapezium shape, a rectangular-shaped base with a small step at both ends and its upper portion being defined as an inverted L-shape with a fold at the end thereof, it also having strategically distributed apertures or holes in the entire perimeter thereof and on its central surface;
▪ a second sheet (42) joined to the above sheet, having a delta-shaped central body, the rectangular-shaped base thereof having the same length as the first sheet (41) to which it is secured, which has been described above, and a rectangular-shaped neck with an inverted "L" configuration with a fold in its end being defined in the upper portion, and having apertures or holes distributed on the surface thereof;
▪ and the third sheet (43) being oblong shaped, inclined at a specific angle that is integral to the inclination of the other sheets, having apertures in the face in contact with the sheet referred to as secondary (42) where they are fixed by means of screws or similar, and also having, on an upper point of both sides of the oblong element, apertures, the axes of which coincide, where a cylinder is introduced via which the vertical lifting and lowering of the tipping body is carried out with a hydraulic piston.

2. The mechanical system for superstructures on vehicles, according to claim 1 wherein the female cavity (a), is **CHARACTERISED in that** they have a hollow central inner portion (a1) forming a circle open at its upper area and with a slightly deformed diameter, and in the outer surface of this central area there are recesses as insertion slots (a2).

3. The mechanical system for superstructures on vehicles, according to claim 1 wherein the male element (b), is **CHARACTERISED in that** it has a slightly deformed semi-circular protuberance (b1) in the central portion thereof and there being in the upper and lower portion of this end there insertion projections (b2).

4. The mechanical system for superstructures on vehicles, according to claims 1, 2 and 3 wherein the joint (c) that is formed in all the connections between profile ends with a female cavity (a) and profile ends with a male protuberance (b), is **CHARACTERISED in that** the entire outer perimeter (b1) of the male protuberance is in direct contact with the majority of the inner perimeter (a1) of the female cavity, similarly to the way the entire inner surface of the projections and protrusions (b2) of the male end are in direct contact with the majority of the surface of the projections and protrusions (a2) of the male protuberance.

5. The mechanical system for superstructures on vehicles, according to claims 1, 2, 3 and 4 wherein the joint (c) is **CHARACTERISED in that** there is a hole or cavity in the central portion thereof, which makes it possible to introduce a fastening element such as a screw or similar.

6. The mechanical system for superstructures on vehicles, according to claim 1 wherein the holes or apertures (d) assigned to screws or similar that are described in different profiles, are **CHARACTERISED in that** they have a certain number of grooves with a specific mass around the perimeter thereof.

7. The mechanical system for superstructures on vehicles, according to claim 1 wherein between the extension of material (212) of the profile referred to as lower (21) of the side (2) and the side profile (13) of the floor (1), are **CHARACTERISED in that** they fit longitudinally to a sheet (4).

8. The mechanical system for superstructures on vehicles, according to claim 1 that, situated between the inner face of each side (2) and over the floor (1), is **CHARACTERISED in that** there are brackets (36) positioned next to the gate (3).

9. The mechanical system for superstructures on vehicles, according to claim 1 wherein the base or bottom portion of the floor (1), is **CHARACTERISED in that** there are two roller elements (5).

10. The mechanical system for superstructures on vehicles, according to claim 1 wherein the base or bottom portion of the floor (1), is **CHARACTERISED in that** there are pads (6) distributed longitudinally.

11. The mechanical system for superstructures on vehicles, according to claim 1 wherein the panels (11, 12 and 13) that form the floor (1), are **CHARACTERISED in that** they are aligned parallel to the central longitudinal axis of the tipping body.

12. The mechanical system for superstructures on vehicles, according to claim 1 wherein the panels (11, 12 and 13) that form the floor (1), are **CHARACTERISED in that** they are aligned transversally to the central longitudinal axis of the tipping body.

## Patentansprüche

1. Mechanisches System für Aufbauten auf Fahrzeugen, welches aus einer unteren Oberfläche oder einem Boden, Seiten, einer Vorderseite und einer KJappe besteht, **dadurch GEKENNZEICHNET, dass**:
- die untere Oberfläche oder der Boden (1) aus drei verschiedenen Arten von Platten (11, 12 und 13), welche sich durch ihre Profile unterscheiden, einem bestimmten Blech (14) und Schrauben oder Ähnlichem derart besteht, dass:
▪ eine Platte die sogenannte zentrale gewalzte Platte (11) mit einem Mutterteil-Mutterteil-artigen Profil (a-a) ist, welches zwei als Mutterteil (a) bezeichnete Aufnahmen oder Hohlräume an beiden Enden, längs verteilte Aussparungen und definierte Löcher oder Öffnungen (d), welche Schrauben oder Ähnlichem zugeordnet sind, aufweist;
▪ es eine durch Druck daran festgemachte, als zwischenliegende (12) bezeichnete gewalzte Platte mit einem Vaterteil-Mutterteil-artigen Profil (b-a) gibt, das an einem Ende ein als Vaterteil (b) bezeichnetes Element aufweist, wobei es an dem anderen Ende einen als Mutterteil (a) bezeichneten Hohlraum gibt, wobei es mit Aussparungen, die längs auf dem Profil davon verteilt sind, und definierten Löchern oder Öffnungen (d), welche Schrauben oder Ähnlichem zugeordnet sind, bereitgestellt ist;
▪ eine Seitenplatte (13), welche einen Überstand oder ein Vaterteil-artiges Element (b) an einem Ende aufweist, wobei es an dem anderen Ende zwei weitere L-förmige Ansätze oder Vorsprünge (131) in verschiedenen Höhen gibt, mit längs verteilten Aussparungen und definierten Löchern oder Öffnungen (d), welche Schrauben oder Ähnlichem zugeordnet sind, bereitgestellt ist;
▪ und ein Blech (14), welches über die gesamte Fläche der Oberfläche angeordnet ist, die durch die verschiedenen Platten (11, 12 und 13) gebildet ist, welche durch bestimmte Gelenke (c) verbunden sind, wobei die Dicke davon direkt mit der Höhe der zwei L-förmigen Vorsprünge (131) verbunden ist, wobei die Dicke des vorerwähnten Blechs (14) die Höhe dieser L-förmigen Vorsprünge (131) zu keiner Zeit überschreitet;
- wobei jede der Seiten (2) aus dem Verbinden von vier verschiedenen Arten von Platten (21, 22, 23 und 24), welche sich durch ihre Profile unterscheiden, einer Platte (244) und Schrauben oder Ähnlichem derart besteht, dass:
▪ eine Platte die sogenannte untere Platte (21) ist, welche L-förmige Hohlräume (211) an einer unteren Seite und in verschiedenen Höhen aufweist, wobei die Abmessungen davon etwas größer als die Vorsprünge des Seitenprofils (13) sind, welche eine Erweiterung des Materials (212) in derselben unteren Seite aufweist; wobei es ferner einen bestimmten Biegewinkel in der gesamten Fläche des Profils, welcher in dem inneren Abschnitt des Kippkörpers angeordnet ist, und einen weiteren spezifischen Biegewinkel in dem äußeren Abschnitt der Fläche des vorerwähnten Körpers gibt, wobei die zwei Flächen nicht parallel sind; wobei das Profil an dem unteren Ende Aufnahmen (213) aufweist, weiche Führungen entlang der Länge der gesamten Platte (21) bilden, wobei es in dem oberen Ende einen Mutterteil-artigen Hohlraum (a) gibt; und wobei sie auch eine Reihe von in dem Kern verteilten Aussparungen, sowie definierte Löcher oder Öffnungen (d), welche Schrauben oder Ähnlichem zugeordnet sind, aufweist;
▪ es ein damit verbundenes, als sekundär unteres (22) bezeichnetes Profil gibt, das einen spezifischen Winkel in der unteren Hälfte des Querschnitts davon, sowohl auf der Fläche, die an dem inneren Abschnitt angeordnet ist, als auch auf der Fläche, die an dem äußeren Abschnitt des Kippkörpers angeordnet ist, aufweist, wobei die zwei Flächen parallel sind; wobei es an einem der Enden davon ein Vaterteilelement (b) und an dem anderen Ende einen Mutterteil-artigen Hohlraum (a) gibt; wobei es auch eine Reihe von an dem Profil verteilten Aussparungen sowie definierte Löcher oder Öffnungen (d), welche Schrauben oder Ähnlichem zugeordnet sind, aufweist;
▪ es eine als zwischenliegende Seite (23) bezeichnete Platte mit einem Vaterteil-Mutterteil-artigen Profil (b-a) gibt, wobei sie an einem Ende einen Mutterteil-artigen Hohlraum (a) und an dem anderen Ende ein Vaterteil-artiges Element (b) aufweist, wobei sie auch längs an dem Kern verteilte Aussparungen sowie definierte Löcher oder Öffnungen (d), welche Schrauben oder Ähnlichem zugeordnet sind, aufweist;
▪ und eine als obere (24) bezeichnete Platte, die an einem Ende ein Vaterteil-artiges Element (b) aufweist, das ein Gelenk (c) mit dem Profil, mit welchem sie in der Strukturanordnung verbunden ist, bildet, wobei sie darauffolgend definierte Löcher oder Öffnungen (d), welche Schrauben oder Ähnlichem an derselben Achse (von der Vorderseite gesehen) zugeordnet sind, aufweist, und wobei es senkrecht zu dieser Achse eine trapezförmige Masse gibt, welche eine Höhlung (241), die an der inneren Fläche des Kippkörpers angeordnet ist, eine Aufnahme (242), die an der äußeren Fläche desselben angeordnet ist, aufweist, und wobei es zwei Aufnahmen an der unteren Fläche des Trapezes gibt;
- wobei die Klappe (3) aus zwei identischen U-förmigen Blechen (31) mit Öffnungen, welche auf der gesamten Oberfläche davon verteilt sind, drei Strukturprofilen (32) mit acht Führungen, Abdeckungen (321), einem Strukturprofil (33) und einem Gestell (34), welches eine Vaterteil-Mutterteil-Verbindung (b-a) der verschiedenen Platten mit den verschiedenen Profilen davon entsprechend der Verbindung einer zentralen Platte mit einem Mutterteil-Mutterteil-Profil (a-a) darstellt, besteht, wobei das unterste Profil oder das untere Profil dieses Gestells (34) darauffolgend ferner Haken an der Basis davon aufweist; wobei die Befestigungsmittel Schrauben oder Ähnliches und die Gelenke (c) zwischen den Platten sind;
- und schließlich, wobei die Vorderseite (4) die Nebeneinanderstellung von Folgendem darstellt:
▪ einem ersten Blech (41), welches in direktem Kontakt mit den Profilen, die den Boden (1) und die Seiten (2) des Aufbaus bilden, steht, das durch einen zentralen Körper mit der Form eines gleichschenkligen Trapezes, eine rechteckförmige Basis mit einer kleinen Stufe an beiden Enden und mit ihrem oberen Abschnitt definiert als eine umgekehrte L-Form mit einer Falte an dem Ende davon gebildet ist, wobei es auch strategisch verteilte Öffnungen oder Löcher in dem gesamten Umfang davon und auf seiner zentralen Oberfläche aufweist;
▪ einem zweiten Blech (42), welches mit dem oberen Blech verbunden ist, das einen Delta-förmigen zentralen Körper aufweist, wobei die rechteckförmige Basis davon die gleiche Länge wie das oben beschriebene erste Blech (41), an welchem sie festgemacht ist, aufweist, und wobei ein rechteckförmiger Hals mit einer umgekehrten "L"-Gestaltung mit einer Falte in seinem Ende in dem oberen Abschnitt definiert ist und Öffnungen oder Löcher aufweist, welche auf der Oberfläche davon verteilt sind;
▪ und dem dritten Blech (43), welches eine längliche Form aufweist, das in einem spezifischen Winkel, der integral mit der Neigung der anderen Bleche ist, geneigt ist, wobei es Öffnungen in der Fläche, die in Kontakt mit dem als sekundären (42) bezeichneten Blech steht, wo sie mittels Schrauben oder Ähnlichen befestigt sind, aufweist, und wobei es an einem oberen Punkt von beiden Seiten des länglichen Elements auch Öffnungen aufweist, deren Achsen zusammentreffen, wo ein Zylinder eingebracht ist, über welchen das vertikale Heben und Senken des Kippkörpers mit einem hydraulischen Kolben durchgeführt wird.

2. Mechanisches System für Aufbauten auf Fahrzeugen nach Anspruch 1, wobei der Mutterteilhohlraum (a) **dadurch GEKENNZEICHNET ist, dass** er einen hohlen zentralen inneren Abschnitt (a1), welcher einen Kreis, der an seinem oberen Bereich offen ist, und mit einem etwas verformten Durchmesser bildet, und es gibt Ausnehmungen als Einführungsschlitze (a2) in der äußeren Oberfläche dieses zentralen Bereichs.

3. Mechanisches System für Aufbauten auf Fahrzeugen nach Anspruch 1, wobei das Vaterteilelement (b) **dadurch GEKENNZEICHNET ist, dass** es einen etwas verformten halbkreisförmigen Überstand (b1) in dem zentralen Abschnitt davon aufweist, und wobei es Einführungsansätze (b2) in dem oberen und unteren Abschnitt dieses Endes gibt.

4. Mechanisches System für Aufbauten auf Fahrzeugen nach Anspruch 1, 2 und 3, wobei das Gelenk (c), welches in allen Verbindungen zwischen Profilenden mit einem Mutterteilhohlraum (a) und Profilenden mit einem Vaterteilüberstand (b) gebildet ist, **dadurch GEKENNZEICHNET ist, dass** der gesamte äußere Durchmesser (b1) des Vaterteilüberstands in direktem Kontakt mit dem größten Teil des inneren Durchmessers (a1) des Mutterteilhohlraums steht, ähnlich wie die gesamte innere Oberfläche der Ansätze und Vorsprünge (b2) des Vaterteilendes in direktem Kontakt mit dem größten Teil der Oberfläche der Ansätze und Vorsprünge (a2) des Vaterteilüberstands steht.

5. Mechanisches System für Aufbauten auf Fahrzeugen nach Anspruch 1, 2, 3 und 4, wobei das Gelenk (c) **dadurch GEKENNZEICHNET ist, dass** es ein Loch oder einen Hohlraum in dem zentralen Abschnitt davon gibt, welches/r ermöglicht, ein Befestigungselement wie eine Schraube oder Ähnliches einzubringen.

6. Mechanisches System für Aufbauten auf Fahrzeugen nach Anspruch 1, wobei die in verschiedenen Profilen beschriebenen Löcher oder Öffnungen (d), welche Schrauben oder Ähnlichem zugeordnet sind, **dadurch GEKENNZEICHNET sind, dass** sie eine bestimmte Anzahl von Nuten mit einer spezifischen Masse um den Umfang davon aufweisen.

7. Mechanisches System für Aufbauten auf Fahrzeugen nach Anspruch 1, wobei die Erweiterung des Materials (212) des als unteres (21) bezeichneten Profils der Seite (2) und das Seitenprofil (13) des Bodens (1) **dadurch GEKENNZEICHNET sind, dass** sie sich längs zu einem Blech (4) anpassen.

8. Mechanisches System für Aufbauten auf Fahrzeugen nach Anspruch 1, welches, zwischen der inneren Fläche jeder Seite (2) und über dem Boden (1) angeordnet, **dadurch GEKENNZEICHNET ist, dass** es Haltewinkel (36) gibt, die neben der Klappe (3) angeordnet sind.

9. Mechanisches System für Aufbauten auf Fahrzeugen nach Anspruch 1, wobei die Basis oder der untere Abschnitt des Bodens (1) **dadurch GEKENNZEICHNET ist, dass** es zwei Walzenelemente (5) gibt.

10. Mechanisches System für Aufbauten auf Fahrzeugen nach Anspruch 1, wobei die Basis oder der untere Abschnitt des Bodens (1) **dadurch GEKENNZEICHNET ist, dass** es Unterlagen (6) gibt, welche längs verteilt sind.

11. Mechanisches System für Aufbauten auf Fahrzeugen nach Anspruch 1, wobei die Platten (11, 12 und 13), die den Boden (1) bilden, **dadurch GEKENNZEICHNET sind, dass** sie parallel zu der zentralen Längsachse des Kippkörpers ausgerichtet sind.

12. Mechanisches System für Auibauten auf Fahrzeugen nach Anspruch 1, wobei die Platten (11, 12 und 13), die den Boden (1) bilden, **dadurch GEKENNZEICHNET sind, dass** sie quer zu der zentralen Längsachse des Kippkörpers ausgerichtet sind.

## Revendications

1. Système mécanique pour des superstructures sur des véhicules composé d'une surface inférieure ou sol, de côtés, d'une partie frontale et d'une vanne qui est **CARACTÉRISÉ en ce que**:
- la surface inférieure ou sol (1) est composée de trois types différents de panneaux (11, 12 et 13) qui se différencient par leurs profils, une certaine tôle (14) et des vis ou similaires, de telle sorte que :
▪ un panneau est le dénommé panneau laminé central (11) avec un profil de type femelle-femelle (a-a), ayant aux deux extrémités deux logements ou cavités appelés femelles (a), des découpes distribuées longitudinalement et des orifices ou ouvertures (d) définis, assignés aux vis ou similaires ;
▪ ancré par pression à ce dernier, il y a un panneau laminé appelé intermédiaire (12) avec un profil de type mâle-femelle (b-a), ayant à une extrémité un élément appelé mâle (b), à l'autre extrémité il y a une cavité appelée femelle (a), étant pourvu de découpes distribuées longitudinalement sur son profil et des orifices ou ouvertures (d) définis, assignés aux vis ou similaires ;
▪ un panneau latéral (13) ayant à une extrémité une protubérance ou élément de type mâle (b), où il y a à l'autre extrémité deux autres saillies ou proéminences en forme de L (131) à des hauteurs différentes, il est pourvu de découpes distribuées longitudinalement et des orifices ou ouvertures (d) définis, assignés aux vis ou similaires ;
▪ et une tôle (14), située sur toute la face de la surface formée par les différents panneaux (11, 12 et 13) unis par certaines jointures (c), dont l'épaisseur est directement liée à la hauteur des deux proéminences en forme de L (131), l'épaisseur de la tôle (14) susmentionnée n'excédant jamais la hauteur de ces proéminences en forme de L (131) ;
- chacun des côtés (2) étant composé de l'union de quatre types différents de panneaux (21, 22, 23 et 24) différenciés par leurs profils, une platine (244) et des vis ou similaires, de telle sorte que ;
▪ un panneau est le dénommé panneau inférieur (21) ayant des cavités en forme de L (211) sur un côté inférieur et à des hauteurs différentes, dont les dimensions sont légèrement plus grandes que les proéminences du profil latéral (13), ayant un prolongement de matériau (212) sur le même côté inférieur ; où il y a en outre un certain angle de pliage sur toute la face du profil, qui est situé dans la portion interne du corps basculant, et un autre angle de pliage spécifique dans la portion externe de la face du corps susmentionné, les deux faces n'étant pas parallèles ; le profil ayant des logements (213) sur l'extrémité inférieure formant des guides sur la longueur de tout le panneau (21), où il y a sur l'extrémité supérieure une cavité de type femelle (a) ; et ayant également une série do découpes distribuées dans le centre et des orifices ou ouvertures (d) définis, assignes aux vis uu similaires ;
▪ il y a uni à celui-ci un profil appelé inférieur secondaire (22), qui a un angle spécifique dans la moitié inférieure de sa section transversale, autant sur la face située sur la portion interne que sur la face située sur la portion externe du corps basculant, les deux faces étant parallèles, où il y a à l'une de ses extrémités un élément mâle (b) et à l'autre extrémité une cavité de type femelle (a) ; celui-ci ayant également une série de découpes distribuées sur le profil, et des orifices ou ouvertures (d) définis, assignés aux vis ou similaires ;
▪ il y a un panneau appelé côté intermédiaire (23) avec un profil de type mâle-femelle (b-a) celui-ci ayant une cavité de type femelle (a) à une extrémité et un élément de type mâle (b) à l'autre extrémité, ayant également des découpes distribuées longitudinalement sur le centre, et des orifices ou ouvertures (d) définis, assignés aux vis ou similaires ;
▪ et un panneau appelé supérieur (24) qui a à une extrémité un élément de type mâle (b), formant une jointure (c) avec le profil auquel il est relié dans l'assemblage de la structure, où il y a ensuite des orifices ou ouvertures (d) définis, assignés aux vis ou similaires sur le même axe (vu depuis la partie frontale), et il y a perpendiculaire à cet axe une masse en forme de trapèze qui a un creux (241) situé sur la face interne du corps basculant, un logement (242) situé sur la face externe de ce dernier et où il y a deux logements sur la face inférieure du trapèze ;
- la vanne (3) étant composée de deux tôles (31) identiques en forme de U avec des ouvertures distribuées sur toute sa surface, trois profils structurels (32) avec huit guides, des couvercles (321), un profil structurel (33) et un châssis (34) constituant une connexion mâle-femelle (b-a) des différents panneaux avec leurs différents profils correspondant à la connexion d'un panneau central avec un profil femelle-femelle (a-a), le profil le plus bas ou le profil inférieur de ce châssis (34) ayant donc en plus des crochets sur sa base ; les moyens de fixation étant des vis ou similaires et les jointures (c) entre les panneaux ;
- et en dernier lieu, la partie frontale (4) constituant la juxtaposition de :
▪ une première tôle (41), étant en contact direct avec les profils qui forment le sol (1) et les côtés (2) de la superstructure, formée d'un corps central avec une forme en trapèze isocèle, une base en forme rectangulaire avec un petit échelon aux deux extrémités et sa portion supérieure étant définie en forme de L inversée avec un pli à son extrémité, celle-ci ayant également des ouvertures ou des orifices distribués stratégiquement sur tout son périmètre et sur sa surface centrale ;
▪ une deuxième tôle (42) unie à la tôle précédente, ayant un corps central en forme de delta, sa base en forme rectangulaire ayant la même longueur que la première tôle (41) à laquelle elle est ancrée, qui a été décrite précédemment, et un col en forme rectangulaire avec une configuration en « L » inversée avec un pli à son extrémité étant défini dans la portion supérieure, et ayant des ouvertures ou orifices distribués sur sa surface ;
▪ et la troisième tôle (43) étant en forme oblongue, inclinée à un angle spécifique qui est solidaire de l'inclinaison des autres tôles, ayant des ouvertures dans la face en contact avec la tôle appelée secondaire (42) où elles sont fixées au moyen de vis ou similaires, et ayant également, sur un point supérieur des deux côtés de l'élément oblong, des ouvertures, dont les axes coïncident, où est introduit un cylindre par lequel le levage et l'abaissement vertical du corps basculant est mis en oeuvre avec un vérin hydraulique.

2. Système mécanique pour des superstructures sur des véhicules, selon la revendication 1 dans lequel les cavités femelles (a) sont **CARACTÉRISÉES en ce qu'**elles ont une portion interne centrale (al) creuse, formant un cercle ouvert sur sa zone supérieure et avec un diamètre légèrement déformé, et il y a sur la surface externe de cette zone centrale des renfoncements comme des rainures d'insertion (a2).

3. Système mécanique pour des superstructures sur des véhicules, selon la revendication 1 dans lequel l'élément mâle (b) est **CARACTÉRISÉ en ce qu'**il a une protubérance (b1) semi-circulaire légèrement déformée dans sa portion centrale et où dans les portions supérieure et inférieure de cette extrémité il y a des saillies d'insertion (b2).

4. Système mécanique pour des superstructures sur des véhicules, selon les revendications 1, 2 et 3 dans lequel la jointure (c) qui est formée dans toutes les connexions entre les extrémités de profil avec une cavité femelle (a) et des extrémités de profil avec une protubérance mâle (b), est **CARACTÉRISÉE en ce que** tout le périmètre externe (b1) de la protubérance mâle est en contact direct avec la majorité du périmètre interne (al) de la cavité femelle, similairement à la façon dont toute la surface interne des saillies et proéminences (b2) de l'extrémité mâle sont en contact direct avec la plus grande partie de la surface des saillies et proéminences (a2) de la protubérance mâle.

5. Système mécanique pour des superstructures sur des véhicules, selon les revendications 1, 2, 3 et 4 dans lequel la jointure (c) est **CARACTÉRISÉE en ce qu'**il y a un orifice ou cavité dans sa portion centrale, qui permet d'introduire un élément de serrage tel qu'une vis ou similaire.

6. Système mécanique pour des superstructures sur des véhicules, selon la revendication 1 dans lequel les orifices ou ouvertures (d) assignés aux vis ou similaires qui sont décrits dans différents profils sont **CARACTÉRISÉS en ce qu'**ils ont un certain nombre de fentes avec une masse spécifique autour de leur périmètre.

7. Système mécanique pour des superstructures sur des véhicules, selon la revendication 1 dans lequel entre les prolongements de matériau (212) du profil appelé inférieur (21) du côté (2) et le profil latéral (13) du sol (1), sont **CARACTÉRISÉS en ce qu'**ils s'ajustent longitudinalement à une tôle (4).

8. Système mécanique pour des superstructures sur des véhicules, selon la revendication 1 qui, situé entre la face interne de chaque côté (2) et sur le sol (1), est **CARACTÉRISÉ en ce qu'**il y a des équerres (36) positionnés près de la vanne (3).

9. Système mécanique pour des superstructures sur des véhicules, selon la revendication 1 dans lequel la base ou portion inférieure du sol (1) est **CARACTÉRISÉE en ce qu'**il y a deux éléments laminés (5).

10. Système mécanique pour des superstructures sur des véhicules, selon la revendication 1 dans lequel la base ou portion inférieure du sol (1) est **CARACTÉRISÉE en ce qu'**il y a des coussinets (6) distribués longitudinalement.

11. Système mécanique pour des superstructures sur des véhicules, selon la revendication 1 dans lequel les panneaux (11, 12 et 13) qui forment le sol (1), sont **CARACTÉRISÉS en ce qu'**ils sont alignés parallèles à l'axe longitudinal central du corps basculant.

12. Système mécanique pour des superstructures sur des véhicules, selon la revendication 1 dans lequel les panneaux (11, 12 et 13) qui forment le sol (1), sont **CARACTÉRISÉS en ce qu'**ils sont alignés transversalement à l'axe longitudinal central du corps basculant.
